# EUROPÄISCHE PATENTANMELDUNG

(11) **EP 0 957 483 A1**
(43) Veröffentlichungstag der Anmeldung: **17.11.1999**
(21) Anmeldenummer: 99106825.5
(22) Anmeldetag: 06.04.1999
(51) Int. Cl.: G11B 20/14, G06K 7/08

(54) **Einrichtung und Verfahren zum Aufzeichnen binärer Informationen auf einer Magnetspeicherkarte unter Verwendung einer DMA-Einheit**

(30) Priorität: 15.05.1998 DE 19821931
(71) Anmelder: Siemens Nixdorf Retail and Banking Systems GmbH, 33106 Paderborn (DE)
(72) Erfinder: Lüttig, Antonius, 33178 Borchen (DE)
(74) Vertreter: Epping, Wilhelm, Dr.-Ing.

(57) **Zusammenfassung**

Beschrieben wird eine Einrichtung und ein Verfahren zur Aufzeichnung binärer Informationen auf der Magnetspur einer Magnetspeicherkarte in Form von Flußwechseln. Eine von Zählern (16, 18) angesteuerte DMA-Einheit (10) greift auf Speicherzellen eines Speichers (Sp) zu, in der die Anzahl der Taktimpulse gespeichert sind, welche den jeweiligen Abstand zwischen zwei Flußwechseln definieren.

## Beschreibung

Die Erfindung betrifft eine Einrichtung zum Aufzeichnen binärer Informationen auf der Magnetspur einer Magnetspeicherkarte in Form von Flußwechseln, mit einem elektromagnetischen Schreibkopf, der bei einer Relativbewegung zwischen ihm und der Magnetspeicherkarte die voneinander beabstandeten Flußwechsel erzeugt, wobei durch die gegenseitigen Abstände der Flußwechsel die binäre Information definiert ist, und mit einem Wegsensor, der abhängig von der Relativbewegung Taktimpulse erzeugt. Eine Steuerung verwertet diese Taktimpulse und steuert den Schreibkopf an, um die Flußwechsel auf der Magnetspur zu schreiben. Ferner betrifft die Erfindung ein Verfahren zum Aufzeichnen binärer Informationen auf der Magnetspur einer Magnetspeicherkarte.

Beim Stand der Technik werden die vom Wegsensor erzeugten Taktimpulse dem Interrupteingang eines Mikroprozessorsystems zugeführt. Die Taktimpulse lösen dann Interrupts aus, die in Interruptroutinen weiterverarbeitet werden, um den Schreibkopf in den richtigen zeitlichen Abständen anzusteuern, der dann die Flußwechsel auf die Magnetspur schreibt. Bei der Interruptverarbeitung zeigt es sich, daß Zeittoleranzen infolge unterschiedlicher Laufzeiten beim Durchlaufen der Interruptroutinen auftreten. Diese Zeittoleranzen sind bei der späteren Auswertung der aufgezeichneten binären Informationen nachteilig, denn sie können zu Fehlinterpretationen führen. Um dieses Problem zu lösen, kann ein Mikroprozessorsystem verwendet werden, das eine sehr schnelle Interruptverarbeitung mit konstanten Laufzeiten für die Interruptroutinen hat. Eine solche Lösung ist jedoch aufwendig und unwirtschaftlich.

Es ist Aufgabe der Erfindung, eine Einrichtung und ein Verfahren zur Aufzeichnung binärer Informationen anzugeben, die bzw. das eine präzise Aufzeichnung ermöglicht und mit geringem Hardwareaufwand zu realisieren ist.

Diese Aufgabe wird für eine Einrichtung durch die Merkmale des Anspruchs 1 gelöst. Vorteilhafte Weiterbildungen sind in den abhängigen Ansprüchen angegeben.

Bei der Erfindung kommt eine DMA-Einheit (DMA steht für direct memory access) zum Einsatz, bei der eine bestimmte Anzahl von aufeinander folgenden Daten von einer Startadresse an in Zellen des Arbeitsspeichers mit aufeinander folgenden Speicheradressen eingespeichert sind. In diesen Speicherzellen sind jeweils die Anzahl der Taktimpulse gespeichert, welche den jeweiligen Abstand zwischen zwei Flußwechseln abhängig von der aufzuzeichnenden binären Information, d.h. dem Binärwert "0" oder "1", definieren. Die DMA-Einheit arbeitet weitgehend unabhängig von einer Steuerung, beispielsweise einem Mikroprozessor, da diese Steuerung den Vorgang des Auslesens von Daten aus dem Speicher lediglich einleitet, aber anschließend nicht mehr an dem Auslesevorgang selbst beteiligt ist. Die DMA-Einheit ermöglicht einen schnellen Datentransfer, da nicht jedes Datenwort einzeln mit Angabe der Speicheradresse abgefordert wird. Mithilfe der DMA-Einheit kann also ein vorher berechneter und im Arbeitsspeicher abgelegter Datensatz zu einer speziellen Hardware übertragen werden, welche dann die Steuersignale für den Schreibkopf erzeugt.

Bei der Erfindung ist weiterhin ein Zählbaustein vorhanden, der die Taktimpulse zählt und bei Erreichen der im Speicher gespeicherten Anzahl von Taktimpulsen den Schreibkopf ansteuert, um einen Flußwechsel zu erzeugen, und die DMA-Einheit zur Ausgabe der nächsten Anzahl von Taktimpulsen veranlaßt. Die aufeinander folgende Ausgabe von Daten aus den Speicherzellen der DMA-Einheit wird also ohne den Umweg über einen Interrupt und die Abarbeitung einer Interruptroutine direkt aus dem Taktimpuls abgeleitet. Auf diese Weise entstehen keine Zeittoleranzen infolge von Interruptlaufzeiten. Vielmehr haben die Flußwechsel die vorgeschriebenen exakten zeitlichen Abstände bzw. Ortsabstände voneinander. Eine Mikroprozessorhardware für eine schnelle Interruptverarbeitung ist nicht erforderlich, d.h. die Einrichtung kann mit relativ geringem technischen Aufwand realisiert werden. Es ist zwar zweckmäßig, einen Mikroprozessor zu verwenden, der allgemeinen Steuerungsaufgaben übernimmt und bei der Erzeugung der binären Informationen und deren Bereitstellung im Arbeitsspeicher steuernd eingreift, auf den die DMA-Einheit dann beim Auslesen der Daten zugreift. Ein solcher Mikroprozessor kann jedoch eine relativ langsame Interruptverarbeitung haben, was bedeutet, daß er wirtschaftlich ist und aufgrund geringer Anforderungen an die Interruptverarbeitung die Verwendung aufwendiger Betriebssysteme gestattet. Eine solche technische Lösung ist neben den genannten Vorteilen zudem sehr komfortabel.

Gemäß einem bevorzugten Ausführungsbeispiel enthalten die Speicherzellen, auf welche die DMA-Einheit zugreift, zusätzliche Zeitdaten, wobei ein durch Zeittakte angesteuerter Zeitzähler vorgesehen ist, der die Zeittakte zählt. Der Schreibkopf wird erst dann angesteuert, wenn der Zeitzähler das jeweilige Zeitdatum erreicht hat. Diese zusätzlichen Zeitdaten sind Korrekturwerte, die dann erforderlich sind, wenn die zeitlichen Abstände zwischen den Flußwechseln nicht ein ganzzahliges Vielfaches von Taktimpulsen sind. Durch die Korrekturwerte wird es möglich, Wegsensoren unterschiedlicher Auflösung zu verwenden bzw. bei Änderung der zeitlichen Abstände zwischen zwei Flußsignalen infolge eines geänderten Aufzeichnungsstandards müssen lediglich die Korrekturwerte geändert und im Speicher abgespeichert werden.

Gemäß einem weiteren Aspekt der Erfindung wird ein Verfahren zur Aufzeichnung binärer Informationen auf der Magnetspur einer Magnetspeicherkarte in Form von Flußwechseln angegeben. Mit diesem Verfahren können ebenfalls die zuvor erläuterten vorteilhaften Wirkungen erreicht werden.

Ausführungsbeispiele der Erfindung werden im folgenden anhand der Zeichnung erläutert. Darin zeigt:
- Figur 1: schematisch den Zusammenhang zwischen Taktimpulsen des Wegsensors, Flußwechseln auf der Magnetspur, den zu schreibenden binären Informationen und den Inhalt der Speicherzellen, auf die die DMA-Einheit zugreift,
- Figur 2: einen ähnlichen Zusammenhang wie nach Figur 1, wobei jedoch Korrektur-Zeitdaten berücksichtigt werden, und
- Figur 3: ein Beispiel eines Hardwareaufbaus zum Erzeugen der Flußwechsel zu den vorgegebenen zeitlichen Abständen.

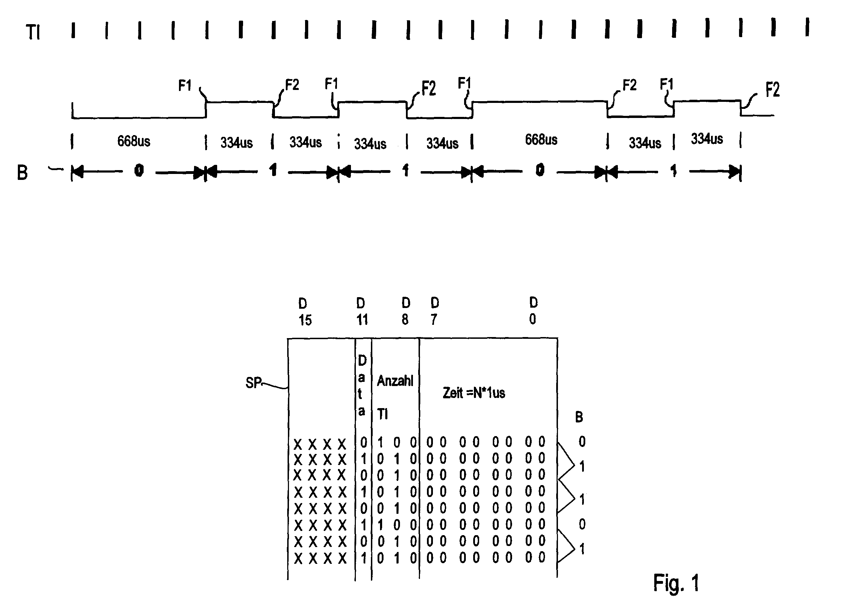

Figur 1 zeigt in einem Zeitdiagramm, der Zeitstrahl läuft von links nach rechts, den Zusammenhang zwischen dem von einem Wegsensor erzeugten Taktimpulsen TI, den vom elektromagnetischen Schreibkopf erzeugten Flußwechseln F1 und F2 sowie den aufzuzeichnenden binären Informationen B. In der Figur 1 unten ist ein Speicher Sp dargestellt, dessen Speicherzellen eine Wortlänge von 16 Bit haben, d.h. in den Bitstellen D0 bis D15 sind binäre Daten gespeichert. Die auf der Magnetspur der Magnetspeicherkarte aufzuzeichnenden binären Informationen werden in Form von Flußwechseln nach dem sogenannten Zweifrequenzcode gespeichert. Bei diesem Zweifrequenzcode treten binäre "1"-Signale beim Aufzeichnen mit annähernd konstanter Geschwindigkeit mit der doppelten Frequenz von Flußwechseln F1, F2 auf wie bei binären "0"-Signalen. Die binäre Information ist also im Ortsabstand zwischen zwei Flußwechseln F1, F2 enthalten. Aufeinander folgende Flußwechsel F1 und F2 haben zueinander unterschiedliche Richtungen, d.h. der elektromagnetische Schreibkopf schreibt aufeinander folgende Flußwechsel mit unterschiedlichen Stromrichtungen der in der Induktionsspule fließenden Ströme.

Als Wegsensor wird im allgemeinen eine elektrooptisch arbeitende Taktscheibe verwendet. Typischerweise beträgt die Auflösung einer solchen Taktscheibe 33,2 Takte pro Millimeter. Dies bedeutet, daß der Wegsensor beim Zurücklegen eines Millimeters 33,2 Taktimpulse TI abgibt. Die Datendichte wird im allgemeinen in Werten bpi (bits per inch) angegeben. Wird als Aufzeichnungsstandard das DIN-Format verwendet, so beträgt die Datendichte 210 bpi. Der Ortsabstand für ein Bit beträgt also 0,12 Millimeter. Bei 33,2 Takte je Millimeter ergeben sich je Bit genau 4 Taktimpulse TI. Die übliche Schreibgeschwindigkeit beträgt 180 Millimeter je Sekunde. Die Zeitabstände zwischen zwei Taktimpulsen TI betragen somit 167 µsek. Die zeitliche Länge für 1 Bit beträgt also 4 x 167 µsek. Wenn innerhalb dieses Zeitabstandes zwei Flußwechsel auftreten, so bedeutet dies nach dem Zweifrequenzcode, daß eine binäre "1" vorliegt. Ist nur ein Flußwechsel vorhanden, so bedeutet dies, daß die binäre Information "0" vorliegt. Dieser Sachverhalt ist in Figur 1 oben dargestellt.

In den Speicherzellen des Speichers Sp sind in den Bitstellen D8 bis D10 die Anzahl der Taktimpulse TI angegeben, die den Binärwert "0" oder "1" definieren. Die Bitstelle D11 betrifft Steuerdaten, wobei aufeinander folgende Speicherzellen abwechselnde Binärdaten "0" oder "1" enthalten. In der Spalte rechts vom Speicher Sp ist der Binärwert B angegeben. Dem Binärwert "0" ist die Anzahl von Taktimpulsen TI "100" zugeordnet, d.h. nach dem Auftreten von vier Taktimpulsen TI ist der nächste Flußwechsel F1, F2 auf die Magnetspur zu schreiben. In den darunterliegenden zwei Speicherzellen sind die TI-Werte für die binäre "1" definiert. Die jeweilige Anzahl von Taktimpulsen TI beträgt "010" d.h. nach dem Ablauf von zwei Taktimpulsen TI ist jeweils ein Flußwechsel F1, F2 erforderlich. Die im Speicher Sp in aufeinanderfolgenden Speicherzellen enthaltene Anzahl von Taktimpulsen TI und der zugehörige Binärwert B stimmen mit der Abfolge von Impulsen, wie sie im oberen Bildteil der Figur 1 längs eines Zeitstrahls angegeben sind, überein. Die Bitstellen D0 bis D7 definieren Korrektur-Zeitdaten. Da beim sogenannten DIN-Format ein ganzzahliges Vielfaches der Taktimpulse TI, beim vorliegenden Beispiel zwei oder vier Taktimpulse TI, den jeweiligen Binärwert definieren, sind die Korrektur-Zeitdaten für sämtliche Speicherzellen "0".

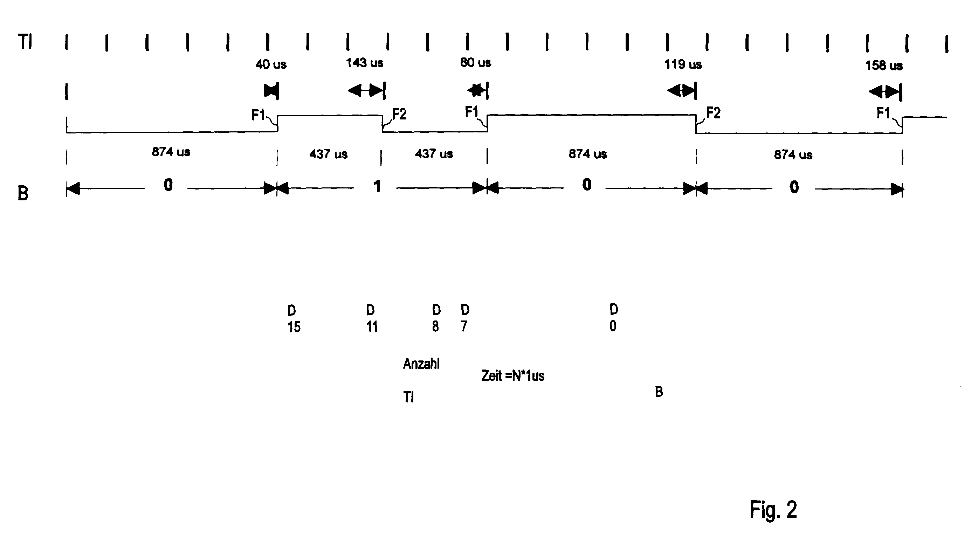

Figur 2 zeigt ein ähnliches Schema wie Figur 1, jedoch wird hier nach dem sogenannten "Burroughs-Format" gearbeitet, d.h. die hier verwendete Datendichte von 161 bpi führt dazu, daß die Binärwerte B nicht durch ganzzahlige Vielfache von Taktimpulsen TI bei gleichem Wegsensor definiert sind. Bei diesem Burroughs-Format ist als Ortsabstand für ein Bit 0,16 Millimeter definert. Bei gleicher Taktscheibe entspricht dieser Ortsabstand 5,24 Taktimpulsen TI. Daraus ergibt sich ein zeitlicher Abstand für ein Bit bei einer konstanten Aufzeichnungsgeschwindigkeit von 180 Millimeter je Sekunde von 5,24 x 167 µsek = 874 µsek. Um eine binäre "0" zu definieren sind also fünf Taktimpulse TI und zusätzlich eine Restzeit von 0,24 x 167 µsek = 40 µsek abzuwarten, bevor der nächste Flußwechsel F1 oder F2 zu schreiben ist. Bei der Erfindung werden daher in den Bitstellen D0 bis D7 der Speicherzellen Korrektur-Zeitdaten hinterlegt, die für den jeweiligen Binärwert angeben, um wieviel zusätzlich zu den ganzzahligen Taktimpulsen noch zu warten ist, um den nächsten Flußwechsel F1, F2 auf der Magnetspur aufzuzeichnen. In der Figur 2, oben, sind in der zweiten Zeile die jeweiligen Korrektur-Zeitdaten angegeben, die zusätzlich zu den ganzzahligen Taktimpulsen TI abzuwarten sind. Sie betragen 40 µsek, 143 µsek, 80 µsek, 119 µsek und 158 µsek. Die Darstellung von Impulsen entlang dem Zeitstrahl betreffen eine Folge von Binärwerten entsprechend "0100", deren jeweilige Anzahl von Taktimpulsen TI und die zugehörigen Korrektur-Zeitdaten in aufeinanderfolgenden Speicherzellen des Speichers Sp hinterlegt sind.

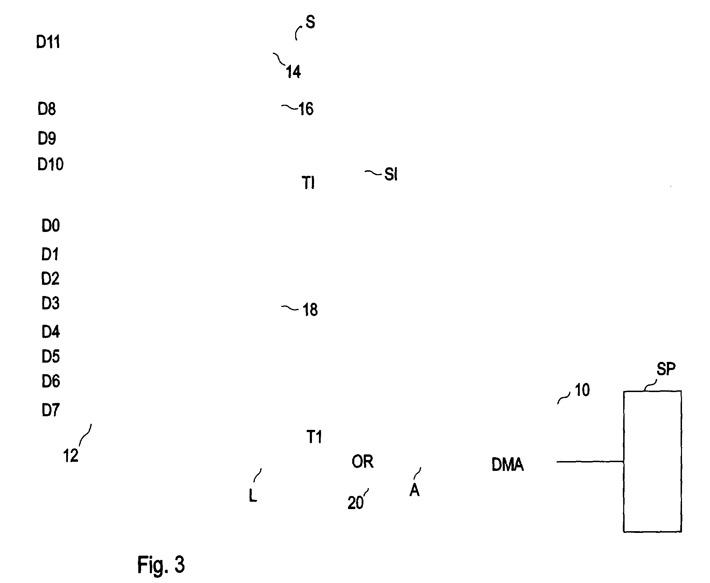

Figur 3 zeigt ein vereinfachtes Beispiel für eine Hardware, die ein Steuersignal S für den elektromagnetischen Schreibkopf erzeugt, wobei eine DMA-Einheit 10 verwendet wird, die direkt auf den Speicher Sp zugreift. Die von der DMA-Einheit 10 ausgegebenen Daten werden in einem Register 12 zwischengespeichert, d.h. die Bitstellen D0 bis D11 des Registers 12 werden mit Daten der Bitstellen D0 bis D11 des Speichers Sp abhängig von einem Ladebefehl L geladen. Der Bitstelle D11 des Registers 12 ist ein Flip-Flop 14 nachgeschaltet. Wie erwähnt wechseln die Binärwerte aufeinander folgender Speicherzellen der Bitstelle D11 ab, d.h. bei Taktansteuerung des Flip-Flops 14 werden abwechselnde Binärwerte "0" oder "1" ausgegeben, wodurch der elektromagnetische Schreibkopf ein Signal S erhält, dessen Binärwert die jeweilige Stromflußrichtung für die Flußwechsel F1, F2 angibt. Die Bitstellen D8, D9 und D10, welche den ganzzahligen Wert der Taktimpulse TI angeben, werden einem 3-Bit-Zähler 16 zugeführt. Wenn ein Wegsensor verwendet wird, der es erforderlich macht, eine größere Zahl von Taktimpulsen TI zu zählen, so kann dieser Zähler 16 auch für eine entsprechend große Zahl ausgelegt sein. Die Bitstellen D0 bis D7, welche die Korrektur-Zeitdaten betreffen, sind mit einem 8-Bit-Zähler 18 verbunden.

Beim Betrieb wird nach einem Anfangsimpuls das Register 12 durch die DMA-Einheit 10 geladen und anschließend wird ein Signal A ausgegeben, das über den ODER-Baustein 20 als Ladebefehl L an die Zähler 16, 18 sowie an das Flip-Flop 14 gelangt. Der Inhalt der Bitstellen D0 bis D11 wird dann übernommen. Der Zähler 16 zählt die Taktimpulse TI. Bei Erreichen der in den Bitstellen D8, D9, D10 enthaltenen Anzahl von Taktimpulsen TI gibt er einen Startimpuls SI aus, der dazu führt, daß der Zähler 18 nunmehr Zeittakte T1 zählt, die im 1-µsek-Abstand auftreten. Wenn die Anzahl der Taktimpulse T1 gleich dem Wert ist, der durch die Bitstellen D0 bis D7 definiert ist, so wird durch Ausgabe eines Impulses am RC-Ausgang der DMA-Baustein 10 zur Ausgabe des Inhalts der nächsten Speicherzelle aus dem Speicher Sp aufgefordert. Zusätzlich wird der Ladebefehl L zur Übernahme der im Register 12 enthaltenen Daten gegeben. Auf diese Weise werden Signale S im Zeitabstand der gezählten Taktimpulse TI plus der Korrektur-Zeit erzeugt, d.h. der elektromagnetische Schreibkopf erzeugt gemäß dem gewählten Aufzeichnungs-Format die Flußwechsel F1, F2 im richtigen Zeitabstand.

Wenn der Antriebsmotor für die Relativbewegung zwischen Schreibkopf und Magnetspeicherkarte Gleichlaufschwankungen zeigt und beispielsweise von der eingestellten Geschwindigkeit von 180 mm/sek. nach oben abweicht, so kann es geschehen, daß während des Zählens von Zeittakten T1 bereits der nächste Taktimpuls TI vorliegt, ohne daß der Impuls am RC-Ausgang des Zählers 18 ausgegeben worden ist. In einem solchen Fall würden nachfolgende Flußwechsel nicht in ordnungsgemäßen Zeitabständen auf der Magnetspur aufgezeichnet. Bei einem erweiterten Ausführungsbeispiel wird daher festgestellt, ob während des aktiven Zählens des Zählers ein Taktimpuls TI auftritt.

Trifft dies zu, so wird sogleich die Ausgabe des Inhalts der nächsten Speicherzelle aus dem Speicher Sp durch die DMA-Einheit 10 veranlaßt und der Zählstand im Zähler 16 um 1 korrigiert, so daß der an sich zu früh auftretende Taktimpuls TI berücksichtigt ist.

Wenn sämtliche Speicherzellen des Speichers Sp ausgelesen sind, so informiert die DMA-Einheit die übergeordnete Steuerung, welche dann den Aufzeichnungsvorgang für die Magnetspeicherkarte beendet.

## Patentansprüche

1. Einrichtung zum Aufzeichnen binärer Informationen (B) auf der Magnetspur einer Magnetspeicherkarte in Form von Flußwechseln (F1, F2),
mit einem elektromagnetischen Schreibkopf, der bei einer Relativbewegung zwischen ihm und der Magnetspeicherkarte die voneinander beabstandeten Flußwechsel (F1, F2) erzeugt, wobei durch die gegenseitigen Abstände der Flußwechsel (F1, F2) die binäre Information definiert ist,
einem Wegsensor, der abhängig von der Relativbewegung Taktimpulse (TI) erzeugt,
mit einer DMA-Einheit (10), die auf aufeinanderfolgende Speicherzellen eines Speichers (Sp) zugreift, in denen jeweils die Anzahl der Taktimpulse (TI) gespeichert sind, welche den jeweiligen Abstand zwischen zwei Flußwechseln (F1, F2) abhängig von der binären Information (B) definieren,
und mit einem Zählbaustein (16), der die Taktimpulse (TI) zählt und bei Erreichen der von der DMA-Einheit (10) ausgegebenen Anzahl von Taktimpulsen (TI) den Schreibkopf ansteuert, um einen Flußwechsel (F1, F2) zu erzeugen, und die DMA-Einheit (10) zur Ausgabe der nächsten Anzahl von Taktimpulsen (TI) veranlaßt.

2. Einrichtung nach Anspruch 1, dadurch **gekennzeichnet**, daß die Speicherzellen, auf die die DMA-Einheit (10) zugreift, Zeitdaten enthalten, daß ein durch Zeittakte (T1) angesteuerter Zeitzähler (18) vorgesehen ist, der die Zeittakte (T1) zählt, und daß der Schreibkopf erst dann angesteuert wird, wenn der Zeitzähler (18) das jeweilige Zeitdatum erreicht hat.

3. Einrichtung nach einem der vorhergehenden Ansprüche, dadurch **gekennzeichnet**, daß der Schreibkopf über ein Flip-Flop (14) angesteuert wird und der Stromfluß abhängig vom Ausgangssignal (S) des Flip-Flops eingestellt wird.

4. Einrichtung nach Anspruch 3, dadurch **gekennzeichnet**, daß eine Bitstelle (D11) der Speicherzellen des Speichers (Sp) für die Datenausgabe an das Flip-Flop (14) vorgesehen ist.

5. Einrichtung nach einem der vorhergehenden Ansprüche, dadurch **gekennzeichnet**, daß ein Registerbaustein (12) vorgesehen ist, der die von der DMA-Einheit (10) ausgegebenen Daten zwischenspeichert, und daß die zwischengespeicherten Daten abhängig von einem Ladebefehl (L) in den Zählbaustein (16) bzw. in den Zeitzähler (18) geladen werden.

6. Einrichtung nach einem der vorhergehenden Ansprüche, dadurch **gekennzeichnet**, daß eine Steuerung vorgesehen ist, die die DMA-Einheit (10) mit Steuerdaten versorgt und die Speicherzellen des Speichers (Sp) lädt.

7. Verfahren zum Aufzeichnen binärer Informationen (B) auf der Magnetspur einer Magnetspeicherkarte in Form von Flußwechseln (F1, F2),
bei dem ein elektromagnetischer Schreibkopf bei einer Relativbewegung zwischen ihm und der Magnetspeicherkarte die voneinander beabstandeten Flußwechsel (F1, F2) erzeugt, wobei durch die gegenseitigen Abstände der Flußwechsel (F1, F2) die binäre Information definiert ist,
ein Wegsensor abhängig von der Relativbewegung Taktimpulse (TI) erzeugt,
eine DMA-Einheit (10) auf aufeinanderfolgende Speicherzellen eines Speichers (Sp) zugreift, in denen jeweils die Anzahl der Taktimpulse (TI) gespeichert sind, welche den jeweiligen Abstand zwischen zwei Flußwechseln (F1, F2) abhängig von der binären Information (B) definieren,
und bei dem ein Zählbaustein (16) die Taktimpulse (TI) zählt und bei Erreichen der von der DMA-Einheit (10) ausgegebenen Anzahl von Taktimpulsen (TI) den Schreibkopf ansteuert, um einen Flußwechsel (F1, F2) zu erzeugen, und die DMA-Einheit (10) zur Ausgabe der nächsten Anzahl von Taktimpulsen (TI) veranlaßt.

8. Verfahren nach Anspruch 7, dadurch **gekennzeichnet**, daß die Speicherzellen, auf die die DMA-Einheit (10) zugreift, Zeitdaten enthalten, daß ein durch Zeittakte (T1) angesteuerter Zeitzähler (18) Zeittakte (T1) zählt, und daß der Schreibkopf erst dann angesteuert wird, wenn der Zeitzähler (18) das jeweilige Zeitdatum erreicht hat.
